(19) **Europäisches Patentamt**
**European Patent Office**
**Office européen des brevets**

(11) Veröffentlichungsnummer: **0 302 323 B1**

## EUROPÄISCHE PATENTSCHRIFT

(45) Veröffentlichungstag der Patentschrift: **08.01.92**

(51) Int. Cl.⁵: **C09C 1/50, B01F 5/06**

(21) Anmeldenummer: **88111827.7**

(22) Anmeldetag: **22.07.88**

(54) Verfahren zur Herstellung von Furnacerussen mit niedriger Struktur und niedrigem Gritgehalt.

(30) Priorität: **06.08.87 DE 3726132**

(43) Veröffentlichungstag der Anmeldung:
**08.02.89 Patentblatt 89/06**

(45) Bekanntmachung des Hinweises auf die
Patenterteilung:
**08.01.92 Patentblatt 92/02**

(84) Benannte Vertragsstaaten:
**DE ES FR GB IT NL**

(56) Entgegenhaltungen:
**DE-A- 2 403 545**
**US-A- 3 523 812**
**US-A- 3 751 009**
**US-A- 4 062 524**
**US-A- 4 213 957**

(73) Patentinhaber: **Degussa Aktiengesellschaft**
**Weissfrauenstrasse 9**
**W-6000 Frankfurt am Main 1(DE)**

(72) Erfinder: **Rotbühr, Lothar, Dr.**
**Volkerstrasse 10**
**W-5030 Hürth-Hermülheim(DE)**
Erfinder: **Fritz, Walter**

**W-5206 Seelscheid 2 / Stein(DE)**

## Beschreibung

Die Erfindung betrifft ein Verfahren zur Herstellung von Furnacerußen mit niedriger Struktur und niedrigem Gritgehalt unter Einsatz einer Alkalimetallsalzlösung als struktursenkendes Additiv. Niedrig strukturierte Furnaceruße finden Anwendung in speziellen Kautschukmischungen, in Kunststoffmischungen sowie in Lacken und Druckfarben. Sie sind besonders interessant an Stellen, in denen hoher Füllungsgrad benötigt wird. Niedriger Gritgehalt ist dafür eine ebenso wichtige anwendungstechnische Voraussetzung.

Die wichtigsten Parameter eines Rußes sind die Primärteilchengröße und die Rußstruktur. Da die Primärteilchengröße nur relativ langwierig und kostenaufwendig bestimmt werden kann, dient an dessen Stelle die Jodadsorption nach DIN 53 582 zur Definition der Teilchenfeinheit des Rußes. Eine hohe Jodadsorption entspricht dabei, bei sonst gleichen Herstellbedingungen, feinen Rußpartikeln.

Eine niedrige Jodadsorption bedeutet dementsprechend einen Ruß mit gröberen Partikeln.

Die Rußstruktur stellt den Grad des Aneinanderhaftens bzw. des Zusammenwachsens der einzelnen Rußpartikel dar.

Als Meßgröße hierfür wird die Bestimmung der Dibutylphthalat-Absorption nach der DIN-Norm 53 601 angesehen. Ruße mit hoher DBP-Zahl weisen also einen hohen Aggregationszustand und eine sperrige, hohe Struktur auf, während bei Rußen mit niedriger Struktur die Rußprimärteilchen mehr einzeln auftreten.

Wegen der geschlossenen, leicht automatisierbaren Arbeitsweise ist das Furnacerußverfahren heute das wichtigste Verfahren zur Herstellung von Rußen. Auch die mögliche Wärmenutzung durch Wärmeaustausch und Verbrennung des als Nebenprodukt anfallenden Restgases hat dazu geführt, daß mit Abstand die größte Tonnage der Verkaufsruße nach diesem Verfahren hergestellt wird.

Bei dem an sich bekannten nach vielen Varianten ausgeführten Furnacerußverfahren wird in einem feuerfest ausgekleideten Reaktor ein sauerstoffhaltiges Medium -z. B. Luft - mit einem Brennstoff umgesetzt. Dieser Brennstoff kann entweder gasförmig oder flüssig sein. Bei der Umsetzung des Brennstoffs mit dem sauerstoffhaltigen Medium, in den meisten Fällen Luft, wird eine heiße Gasmasse gebildet, die vom vorderen Teil des Reaktors in Richtung auf das Reaktorende strömt.

In diese heiße Gasmischung wird an einer Stelle, an der der Brennstoff im wesentlichen ausgebrannt ist, ein flüssiger Rußrohstoff eingesprüht, wobei dieser Rohstoff verdampft und durch Umsetzung mit der heißen Gasmasse Ruß bildet. Durch Einsprühen von Wasser und durch Wärmeaustausch wird weiter stromab der Ruß abgekühlt und durch Filter von dem Restgas abgetrennt.

Es existieren apparative Maßnahmen, mit denen die Rußstruktur und damit die DBP-Adsorptionswerte niedrig eingestellt werden können.

So kann beispielsweise nach DE-PS 15 92 864 die Rußstruktur und die DBP-Zahl durch Einsatz niedriger Verbrennungslufttemperaturen abgesenkt werden. Auch durch Einsatz hoher Gasmengen oder Brennstoffmengen sinkt die Rußstruktur ab (DE-PS 15 92 863). Es wird auch vorgeschlagen, den Verbrennungslufteinsatz auf 2 Zonen zu verteilen (DE-PS 27 26 183). Eine Absenkung der Rußstruktur ist auch noch möglich, daß man das rußfreie Abgas teilweise in die Brennkammer des Reaktors zurückführt (DE-PS 29 44 855).

Außer den apparativen Maßnahmen ist jedoch die Eingabe von struktursenkenden Additiven nicht zu umgehen, wenn es um die Herstellung von sehr niedrig strukturierten Rußen geht. Am wirksamsten sind hier Erdalkalimetallsalze und Alkalimetallsalze, insbesondere Salze von Kalium, Rubidium und Caesium. Es wird angenommen, daß sich bei den hohen Temperaturen in der Entstehungszone des Rußes freie Alkalimetallionen bilden und diese ein Zusammenwachsen der Rußprimärteilchen zu langkettigen oder sperrigen Aggregaten verhindern. Es hat sich allerdings gezeigt, daß die Art der Einbringung der Alkalimetallsalze von entscheidender Bedeutung sein kann.

So ist in der DE-AS 24 03 545 beschrieben, daß eine verbesserte Absenkung der Rußstruktur erhalten werden kann, wenn man die wäßrige Lösung des Additivs, anstatt sie, wie üblich, in das Rußöl einzubringen und mit diesem in den Reaktor einzusprühen, gesondert vom Rußöl mittels eines Zerstäubergases einsprüht. Die erreichbaren Verbesserungen sind jedoch noch nicht optimal.

Neben der unbefriedigenden struktursenkenden Wirksamkeit der Alkalimetallverbindungen tritt bei der Herstellung niedrig strukturierter Ruße ein sehr nachteiliger Effekt auf:
Es entstehen hierbei leicht Koksteilchen, die sich in dem erzeugten Rußprodukt als sogenannte "Gritteilchen" wiederfinden. Man kann diese Verunreinigungen durch Durchwaschen des Rußes mit Wasser durch ein Naßsieb mit 45 µm Maschenweite nach DIN 53 580 bestimmen. Als Ursache für die Gritbildung nimmt man an, daß sich dabei Rußöl auf glühenden Additivteilchen zu Koks zersetzt.

Es wurde nun gefunden, daß unter Einsatz einer Alkalimetallsalzlösung als übliches struktursenkendes Additiv die Additivwirkung verbessert bzw. optimal ausgenutzt wird und eine Gritbildung praktisch ausbleibt, wenn man das Additiv in das flüssige Rußöl einspeist, beide Flüssigkeiten über einen oder mehrere

2

statische Mischer gegeben und die erzeugte Mischung dann dem Furnacerußreaktor zugeführt wird.

Bevorzugt werden dabei statische Mischer mit 3 bis 20 Stufen verwendet. Das Additiv wird dabei am besten als Nebenstrom unmittelbar in die erste, vom Rußöl-Hauptstrom durchströmte Mischstufe eingeführt.

Als günstig wurde befunden, wenn in den Mischern eine Druckdifferenz von 0,1 - 2,0 bar herrscht.

Der statische Mischer soll dabei möglichst dicht an die Einführungsstelle des Rußöls in den Reaktor herangerückt werden. Es ist auch möglich, den oder die statischen Mischer in den Ölinjektor selbst einzubauen.

Demgemäß ist ein weiterer Gegenstand der Erfindung eine Vorrichtung zur Herstellung von Furnaceruß mit niedriger Struktur und geringem Gritgehalt unter Einsatz einer Alkalimetallsalzlösung als struktursenkendes Additiv, welche dadurch gekennzeichnet ist, daß in das Ölzufuhrrohr eines herkömmlichen Ölinjektors für Furnacerußreaktoren ein Rohr eingeflanscht ist, in das ein oder mehrere an sich bekannte statische Mischelemente eingeschoben sind.

Die Rußöl/Additiv-Mischung kann durch Düsen oder offene Rohre an geeigneten Stellen des Reaktors eingesprüht werden. Als geeignet sind solche Stellen zu verstehen, die der Rußfachmann üblicherweise zur Gewinnung eines bestimmten Rußtyps wählt.

Ein statischer Mischer besteht aus Mischelementen, die zueinander versetzt angeordnet sind. Durch einen statischen Mischer wird eine Homogenisierung von zwei verschiedenen Komponenten ohne bewegte Teile erreicht. Durch die Einwirkung der Mischelemente tritt beim Fluß der Komponenten durch den Mischer eine immer feinere Aufspaltung der Zusatzkomponente Additiv in der Hauptkomponente, dem Rußöl, auf. Dabei können 3 - 20 Mischstufen angewandt werden.

Die Wirksamkeit der erfindungsgemäßen Arbeitsweise soll nun an einigen Beispielen dargestellt werden. Für die Rußherstellung wurden dabei folgende Rohstoffe benutzt:

Rußöl

| | |
|---|---|
| Dichte (20° C) | 1,14 g/ml |
| Destillationsrückstand | 3,9 % |
| Conradsonrückstand | 2,1 % |
| Asphalthene | 2,7 % |
| Toluolunlös. Best. | 0,04 % |
| Siedebeginn | 260° C |
| mittl. Siedepunkt | 360° C |

Erdgas

| | |
|---|---|
| $CO_2$ | 1,1 % |
| $CH_4$ | 82,7 % |
| $C_2H_4$ | 3,2 % |
| $C_3H_8$ | 0,6 % |
| $C_4H_{10}$ | 0,2 % |
| $N_2$ | 12,2 % |

Außer den nach DIN genormten Prüfverfahren wird nachstehendes Prüfverfahren benutzt, das für die Eigenschaften von Rußen bedeutsam ist, die in der Kunststoffindustrie Einsatz finden. Das trifft insbesondere für niedrigstrukturierte Ruße mit hohen Jodadsorptionen zu.

Farbtiefe in Weich-PVC-Plastisol

Es wird eine homogene Paste aus 30 Teilen Vestolit 7001 (PVC) und 20 Teilen Dioctylphthalat (Weichmacher) und einem Teil Listab 52 (Stabilisator) hergestellt. Von dieser Paste werden 5 g abgewogen und auf einen Engelmann-Reibteller überführt. Hierzu werden 50 mg Ruß gegeben, die vorsichtig eingearbeitet werden. Nun wird der Anreibteller geschlossen und die Paste mit 50 Umdrehungen angerieben. Nach Öffnung des Anreibtellers wird die Paste zur Mitte geführt und dies 5 mal wiederholt. Anschließend wird die Paste neben eine Paste mit Standardruß auf eine Glasscheibe aufgestrichen und 10 Minuten lang im Trockenschrank bei 110° C geliert. Durch das Glas der Glasscheibe hindurch kann dann die Farbtiefe unter Zuhilfenahme eines lichtstarken Punktstrahlers genau beurteilt werden. Ein hoher Wert bedeutet dabei eine hohe Farbtiefe, d. h. einen tiefschwarzen Ruß.

Beispiel 1

Für die Herstellung eines feinteiligen niedrigstrukturierten Rußes wurde ein Reaktor nach der DE-OS 25 30 371 verwendet. Dabei wies die Brennkammer einen Durchmesser von 460 mm, die Engstelle einen Durchmesser von 120 mm und die Reaktionskammer einen Durchmesser von 200 mm auf. Als Grundbedingung wurden folgende Einsatzstoffmengen und Einstellbedingungen konstant gefahren:

Luftmenge          2.500 Nm³/h
Gasmenge          160 Nm³/h
Quenchabstand          2.980 mm
wäßrige Kaliumchloridlösung mit 200 g/l          19 l/h

Die Öltemperatur (Rußrohstofftemperatur) betrug 140° C. Der Rußrohstoff wurde durch Druckzerstäubung mit einer 90°-Düse mit 390 Liter/h Standardleistung eingebracht. Die Ölmenge wurde so gewählt, daß sich ein Jodadsorptionswert von 240 mg/g einstellte. Die nachstehenden, mit b, c, d bezeichneten Unterversuche unterscheiden sich dadurch voneinander, daß die Kaliumchloridlösung einmal auf bekannte Weise in das Öl eingegeben wurde (Einstellung 1b), einmal durch separate Verdüsung mit ca. 30 Nm³/h Preßluft aus 2 Düsen unmittelbar neben der Öldüse eingebracht wurde (Einstellung 1d) und dazwischen jeweils ein Lauf erfolgte, in dem die KCl-Lösung in das Öl eingebracht und der Öl/Kaliumchlorid-Versatz einen statischen Mischer mit 3 Mischstufen passierte, ehe er in Form einer innigen Mischung der Sprühdüse zugeführt wurde (Einstellung 1a und 1c). Die einzelnen Läufe wurden im Interesse einer guten Vergleichbarkeit hintereinander durchgeführt.

Nachstehend sind die Rußmengen und Prüfdaten aufgelistet, die sich hierbei einstellten.

| Einbringung des Additivs | | Lauf 1a | Lauf 1b | Lauf 1c | Lauf 1d |
|---|---|---|---|---|---|
| | | in das Öl über statischen Mischer | in das Öl | in das Öl über statischen Mischer | sep. Zerstäubung mit 30 m²/h Preßluft |
| Ölmenge | l/h | 380 | 375 | 390 | 380 |
| Rußmenge | kg/h | 172 | 169 | 172 | 166 |
| Öldruck vor Mischer | bar | 6,8 | - | 6,8 | - |
| Öldruck nach Mischer | bar | 6,4 | 6,4 | 6,4 | 6,0 |
| Druckabfall im Mischer | bar | 0,4 | - | 0,4 | - |
| Jodadsorption DIN 53 582 | mg/g | 243 | 244 | 244 | 243 |
| DBP-Adsorption DIN 53 601 | ml/100g | 51 | 55 | 51 | 54 |
| Farbtiefe in Weich-PVC-Plastisol | % | 80 | 76 | 80 | 78 |

Aus vorstehender Tabelle geht hervor:

1. Die produzierte Rußmenge geht durch die Anwendung des statischen Mischers nicht zurück, im Gegenteil, sie steigt gegenüber der separaten Eingabe mit Preßluftzerstäubung noch leicht an.

2. Die DBP-Adsorption der erhaltenen Ruße ist unter sonst gleichen Produktionsbedingungen bei Anwendung des statischen Mischers deutlich niedriger als bei normaler Eintragung der wäßrigen Additivlösung in das Rußöl. Die DBP-Adsorption ist auch deutlich niedriger als bei separater Einsprühung des Additivs.

3. Die Farbtiefe des produzierten Rußes in Weich-PVC-Plastisol ist bei Eingabe der Additivlösung in das Öl über den statischen Mischer deutlich höher, d. h. günstiger, als bei normaler Eingabe in das Öl oder separater Zerstäubung der Additivlösung.

Beispiel 2

In einem Reaktor entsprechend der DE-PS 25 30 371 mit einem Brennkammerdurchmesser von 460 mm, einem Engstellen-Durchmesser von 130 mm und einem Reaktionskammerdurchmesser von 280 mm wurde ein niedrigstrukturierter Furnaceruß mit einer mittleren Jodadsorption hergestellt. Als Grunddaten wurden folgende Einstellbedingungen gefahren bzw. eingestellt:

Luftmenge         3.100 $Nm^3/h$

Erdgasmenge      185 $Nm^3/h$

Quenchabstand      2.400 mm

Die Öltemperatur (Rußrohstofftemperatur) betrug 150° C. Der Rußrohstoff wurde durch eine 60° Düse mit 900 l/h-Standardleistung durch Druckzerstäubung in den Reaktor eingebracht. Die Ölmenge wurde so einreguliert, daß sich eine Jodadsorption von ca. 100 mg/g einstellte. Im Gegensatz zu Beispiel 1 wurde die Additivmenge (Kaliumkarbonat) so reguliert, daß DBP-Adsorptionswerte von 51 ml/100 g Ruß erreicht wurden. Die Produktionsperioden wurden unmittelbar hintereinander gefahren, wodurch echte Vergleichbarkeit erreicht wurde.

| Einbringung des Additivs | | Lauf 2a | Lauf 2b | Lauf 2c |
|---|---|---|---|---|
| | | in das Öl über statischen Mischer | in das Öl | sep. Zerstäubung mit 30 m²/h Preßluft |
| Ölmenge | kg/h | 1.014 | 1.016 | 1.019 |
| Rußmenge | kg/h | 593 | 590 | 593 |
| Öldruck vor Mischer | bar | 10,6 | - | - |
| Öldruck nach Mischer | bar | 9,5 | 9,5 | 8,9 |
| Druckabfall im Mischer | bar | 1,1 | - | - |
| erforderliche $K_2CO_3$-Zugabelosung 150 g/l | l/h | 7 | 12 | 11,5 |
| Jodadsorption DIN 53 582 | mg/g | 103 | 103 | 103 |
| DBP-Adsorpt. DIN 53 601 | ml/100g | 51 | 51 | 51 |
| Gritgehalt (Siebrückstand nach DIN 53 580) | % | unter 0,009 | 0,009 -0,06 | 0,009 -0,10 |

EP 0 302 323 B1

Zwei wichtige Ergebnisse sind hervorzuheben:

1. Bei der Eingabe der Pottaschelösung in das Öl, Passage des Öl/Additiv-Versatzes über einen statischen Mischer mit 10 Mischstufen werden nur etwa 60 % des Additivs benötigt im Vergleich zur separaten Verdüsung und auch im Vergleich zu der Eingabe in das Öl ohne Verwendung des statischen Mischers. Das erfindungsgemäße Verfahren ist also wesentlich effektiver.

2. Durch die erfindungsgemäße Einbringung des Additivs (vgl. Lauf 2a) kann der Ruß praktisch absolut gritfrei hergestellt werden, im Gegensatz zu den beiden Vergleichsläufen (2b, 2c), bei denen jeweils Grit entsteht.

Die überraschend hohe Wirksamkeit des erfindungsgemäßen Verfahrens in bezug auf Strukturabsenkung und Gritvermeidung könnte darauf beruhen, daß der erfindungsgemäß eingesetzte statische Mischer die Additivlösung im Rußöl in Mikrotröpfchen aufteilt und diese feine Aufteilung das Zusammenwachsen von Rußprimärteilchen zu höherstrukturierten Gebilden an wesentlich mehreren Stellen pro Zeiteinheit verhindern als dies die Tröpfchen einer auf übliche Weise eingebrachten Additivlösung vermögen. Die Vermeidung der Gritbildung könnte wiederum dadurch erklärt werden, daß das Additiv nicht in Makrotröpfchen in den Reaktor gelangt, auf denen Koks aufwachsen könnte.

Zur Ausführung des erfindungsgemäßen Verfahrens ist es günstig, einen oder mehrere statische Mischer möglichst kurz vor der Eingabestelle des Rußöl/Additiv-Gemisches in den Ofen in den Rußöl und Additiv führenden Rohstoffstrom zu integrieren.

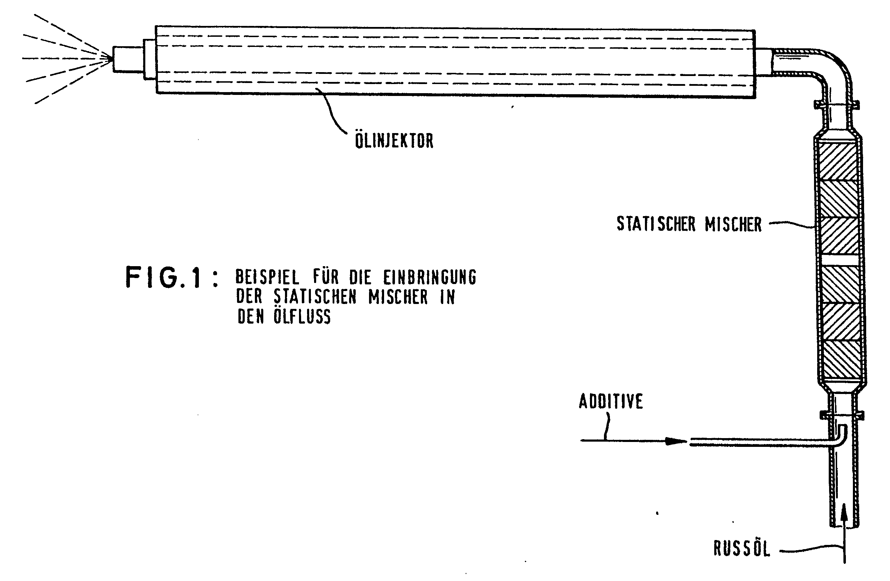

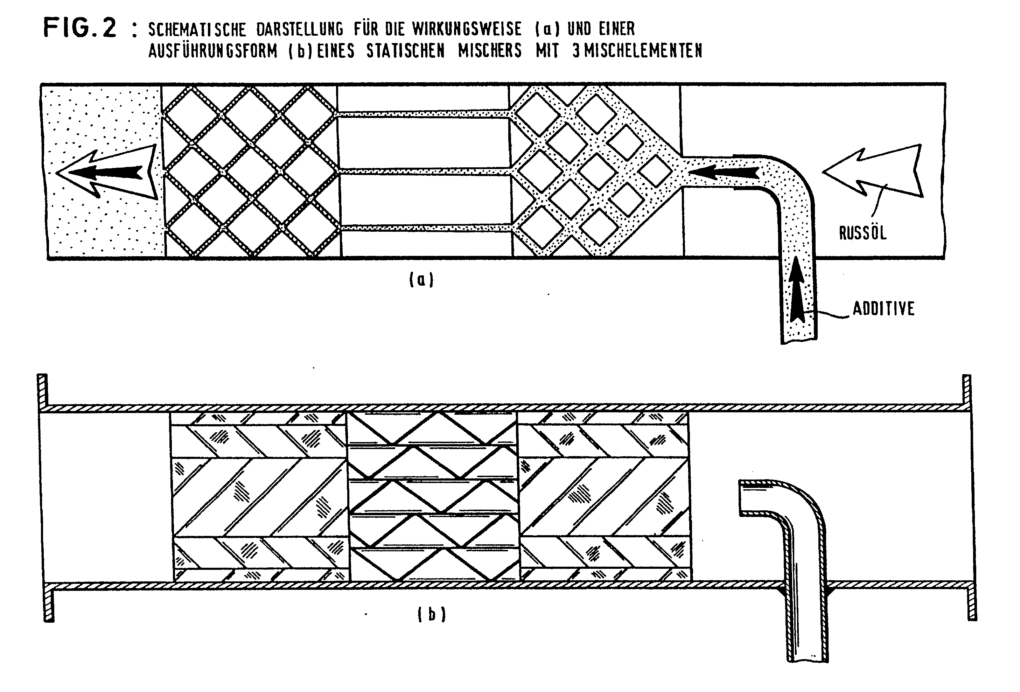

Ein Beispiel für die Anordnung einer Mischeinrichtung mit zwei dreistufigen statischen Mischern gemäß der Vorrichtungserfindung ist in Figur 1 der Zeichnung dargestellt. Die Mischfunktion in einem dreistufigen statischen Mischer, bestehend in einer progressiven Zerteilung eines Additiv-haltigen Nebenstroms in zahlreiche Einzelströme, welche sich im Hauptstrom verteilen, ist schematisch in Figur 2 (oberes Bild) wiedergegeben. Das untere Bild von Figur 2 zeigt im Querschnitt die Leitflächenanordnung in dem dreistufigen statischen Mischer.

## Patentansprüche

1. Verfahren zur Herstellung von Furnacerußen mit niedriger Struktur und niedrigem Gritgehalt unter Einsatz einer Alkalimetallsalzlösung als struktursenkendes Additiv,
   **dadurch gekennzeichnet,**
   daß das Additiv in das flüssige Rußöl eingespeist, beide Flüssigkeiten über einen oder mehrere statische Mischer gegeben und die erzeugte Mischung dann dem Furnacerußreaktor zugeführt wird.

2. Verfahren nach Anspruch 1,
   **dadurch gekennzeichnet,**
   daß statische Mischer mit 3 bis 20 Stufen verwendet werden.

3. Verfahren nach Anspruch 1 oder 2,
   **dadurch gekennzeichnet,**
   daß in den Mischern eine Druckdifferenz von 0,1 - 2,0 bar herrscht.

4. Vorrichtung zur Herstellung von Furnacerußen mit niedriger Struktur und geringem Gritgehalt unter Einsatz einer Alkalimetallsalzlösung als struktursenkendes Additiv,
   **dadurch gekennzeichnet,**
   daß in das Ölzufuhrrohr eines herkömmlichen Ölinjektors für Furnacerußreaktoren zum Mischung des Öls mit dem Additiv ein Rohr eingeflanscht ist, in das ein oder mehrere an sich bekannte statische Mischelemente eingeschoben sind.

## Claims

1. A process for the production of furnace blacks of low structure and low grit content using an alkali metal salt solution as the structure-lowering additive, characterized in that the additive is introduced into the liquid carbon black oil, being the raw material for carbon black, both liquids are passed through one or more static mixers and the resulting mixture is then fed to the furnace black reactor.

2. A process as claimed in claim 1, characterized in that static mixers having 3 to 20 stages are used.

3. A process as claimed in claim 1 or 2, characterized in that a pressure difference of 0,1 to 2,0 bar prevails in the mixers.

4. An apparatus for the production of furnace blacks of low structure and low grit content using an alkali metal salt solution as the structure-lowering addtitive, characterized in that a pipe into which one or more static mixing elements known per se is/are inserted is flanged into the oil feed pipe of a conventional oil injector for furnace black reactors for mixing the oil with the additive.

**Revendications**

1. Procédé de production des noirs de carbone du four avec une structure faible et une faible teneur en "grit", étant un corps étranger solide en particules, par mise en oeuvre d'une solution d'un sel de métal alcalin comme additif de diminution de structure, caractérisé en ce que l'additif est introduit pour l'alimentation dans "l'huile de noir de carbone" étant la matière première pour noir de carbone, que l'on verse les deux liquides par l'intermédiaire d' un ou plusieurs mélangeurs statiques et que le mélange obtenu est amené ensuite au réacteur du four.

2. Procédé selon la revendication 1, caractérisé en ce que des mélangeurs statiques avec 3 à 20 étages sont utilisés.

3. Procédé selon la revendication 1 ou 2, caractérisé en ce que dans les mélangeurs une différence de pression de 0,1 à 2,0 bar règne.

4. Dispositif pour la production de noir de carbone du four avec une structure faible et une teneur faible en "grit" par mise en oeuvre d'une solution d'un sel de métal alcalin comme additif diminuant la structure, caractérisé en ce que dans le tube d'amenée d'huile d'un injecteur d' huile ordinaire pour réacteurs de four, un tube est introduit par une bride pour le mélange de l'huile avec l'additif, das lequel un ou plusieurs éléments de mélange statiques connus en soi, sont intégrés.

ÖLINJEKTOR

STATISCHER MISCHER

**FIG.1 :** BEISPIEL FÜR DIE EINBRINGUNG
DER STATISCHEN MISCHER IN
DEN ÖLFLUSS

ADDITIVE

RUSSÖL

EP 0 302 323 B1

FIG.2 : SCHEMATISCHE DARSTELLUNG FÜR DIE WIRKUNGSWEISE (a) UND EINER
AUSFÜHRUNGSFORM (b) EINES STATISCHEN MISCHERS MIT 3 MISCHELEMENTEN

RUSSÖL

ADDITIVE

(a)

(b)